# EUROPEAN PATENT APPLICATION

(11) **EP 4 470 363 A1**
(43) Date of publication of application: **04.12.2024**
(21) Application number: 24169846.3
(22) Date of filing: 12.04.2024
(51) Int. Cl.: A01G 23/00, B66C 1/58, B66C 1/68, B66C 13/08, B66C 13/18, B66C 15/04, E02F 3/43

(54) **AUTOMATIC TRANSFER OF AN ARTICULATED BOOM OF A FORWARDER FOR HANDLING LOGS**

(30) Priority: 30.05.2023 FI 20235601
(71) Applicant: Deere & Company, Moline, IL 61265 (US)
(72) Inventor: Hyvönen, Mika P., 33710 Tampere (FI); Siltanen, Vesa, 33610 Tampere (FI); Käppi, Timo, 37120 Nokia (FI); Paakkunainen, Marko, 33820 Tampere (FI)
(74) Representative: Berggren Oy

(57) **Abstract**

The method for controlling a forwarder comprises storing in a control unit of the forwarder one or more predetermined paths of a head of an articulated boom of the forwarder or a grapple suspended from the head; enabling an automatic transfer of the head or the grapple along one of the paths. The enabling is carried out manually by an operator with the help of a control device; setting off the automatic transfer with the help of a predetermined motion or sequence of motions carried out manually. The method further comprises automatically transferring the head or the grapple under control of the control unit, from a current position of the head or the grapple representing a starting position of the path, along the path, and to an end of the path; stopping the head or the grapple at the end of the path; and automatically disabling the automatic transfer of the head or the grapple after reaching the stopping position.

## Description

### Field of the invention

The present invention relates to forest work machines, and, more particularly, to a forwarder including an articulated boom and a loading space. The invention relates to a method for controlling a forwarder. The invention further relates to a forwarder. In the invention, the boom is automatically transferred along a predetermined path.

### Background of the invention

In forestry, trees growing in a forest at a worksite are in many cases felled, delimbed and also crosscut to a desired length or into logs with a so-called forest harvester, which is a self-propelled vehicle including a harvester head attached to an articulated boom of the forest harvester. The logs remain on the worksite along a route on a position where they have been ejected by the harvester head during crosscutting and deposited in one or more piles, which are optionally sorted according to defined properties of the logs, such as species and timber assortment, and are collected subsequently with a so-called forwarder.

The forwarder is a self-propelled vehicle including an articulated boom to a head of which a grapple is attached for grabbing one or more logs at a time and a loading space that is surrounded by posts and into which the collected logs are deposited. Once the loading space is sufficiently filled, the forwarder drives to a forest depot which may be adjacent to a logging road and deposits the logs in a single or multiple piles, in particular sorted according to the defined properties of the logs. The logs are later collected by trucks and transported to a processing plant such as a saw mill or a paper factory.

When working with the forwarder, a typical task to be performed with the boom is to transfer logs from locations outside of the loading space to the inside of the loading space and lower the grapple for depositing the logs.

Another typical task to be performed with the boom after depositing the logs into the loading space is to move the empty grapple from the loading space back to a location outside the loading space where logs to be loaded have been collected into a pile.

The above tasks which are repeated a number of times during a work performance are often almost identical with each other and involve repeating control functions which an operator of the forwarder actuates by different controllers always in a very similar way. In spite of this, the implementation of the control functions required for the task require that the operator is careful and attentive.

For example, in the vicinity of travel paths of the boom and the grapple, there may be obstacles which have to be taken into account when carrying out the tasks. The path of the boom must not accidentally deviate from the intended path such that a part of the boom, the grapple, or the logs held in the grapple hit the obstacle in the vicinity of the path, such as a headboard in the front part of the loading space or any of the posts on either side of the loading space of the forwarder.

As a result, it has not been possible to automate the movements of the boom, but it has been considered best that when controlling the boom, the operator should be in control all the time and select paths deemed appropriate under existing conditions when carrying out the tasks.

When the grapple mounted to the boom of the forwarder is moved inside the loading space, between the posts of the loading space, from the inside to the outside of the loading space, or from the outside to the inside of the loading space, or over the posts, it is difficult for an operator in an operator's cabin of the forwarder to see at which point the grapple is exactly located with respect to the loading space. Thus, there is a risk that the boom, the grapple, and/or the logs held in the grapple collide with the above obstacle.

### Brief summary of the invention

It is an aim of the invention to present a method such that a grapple mounted to an articulated boom of a forwarder can be moved from the inside of a loading space of the forwarder to the outside of the loading space and/or from the outside of the loading space to the inside of the loading space more easily and securely than before.

The method according to the invention is presented in claim 1.

The forwarder according to the invention is presented in claim 15.

The dependent claims 2 to 13 present examples of the method according to the invention.

The method for controlling a forwarder comprises storing in a control unit of the forwarder one or more predetermined paths of a head of an articulated boom of the forwarder or a grapple suspended from the head; enabling an automatic transfer of the head or the grapple along one of the paths. The enabling is carried out manually by an operator with the help of a control device; setting off the automatic transfer with the help of a predetermined motion or sequence of motions carried out manually by the operator with the help of the control device. The method further comprises automatically transferring the head or the grapple under control of the control unit, from a current position of the head or the grapple representing a starting position of the path, along the path, and to an end of the path representing a stopping position of the path; stopping the head or the grapple at the end of the path; and automatically disabling the automatic transfer of the head or the grapple under control of the control unit after reaching the stopping position.

According to an example, each path is constituted by two or more predetermined target positions for the head or the grapple. The target positions are located in the space around, in the vicinity of, or within reach of the boom, the head, or the grapple, and the path is represented by the target positions in a predetermined sequence.

According to an example, the path is adapted for loading logs from a pile on the ground into a loading space of the forwarder or the path is adapted for unloading logs from the loading space to a pile on the ground.

An advantage of the invention is that the boom, the head, or the grapple can be moved faster, more easily and more straightforwardly than before. In other words, the invention facilitates the control of the boom of the forwarder and reduces the effort and stress of the operator of the forwarder. As another advantage, the manipulation of the boom is still simpler, more secure and easier to implement under demanding logging conditions than when providing a fully automated control of the boom.

### Description of the drawings

In the following, the invention will be described in more detail with reference to the appended drawings, in which
- Fig. 1: shows an example of a forwarder in which the invention can be applied,
- Fig. 2: shows in a principle view details and connections, including controllers for manual control of a boom of the forwarder shown in Fig. 1, operably connected to each other, the boom, and a control unit of the forwarder, and

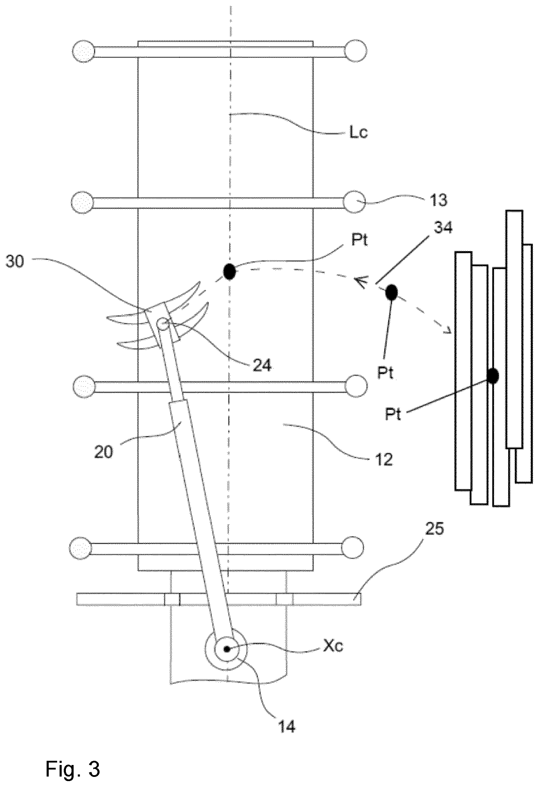

- Fig. 3: shows in a top view of a loading space of the forwarder shown in Fig. 1 and illustrating automatic transfer of a grapple of the forwarder along a path and via predetermined target positions.

### Detailed description of the invention

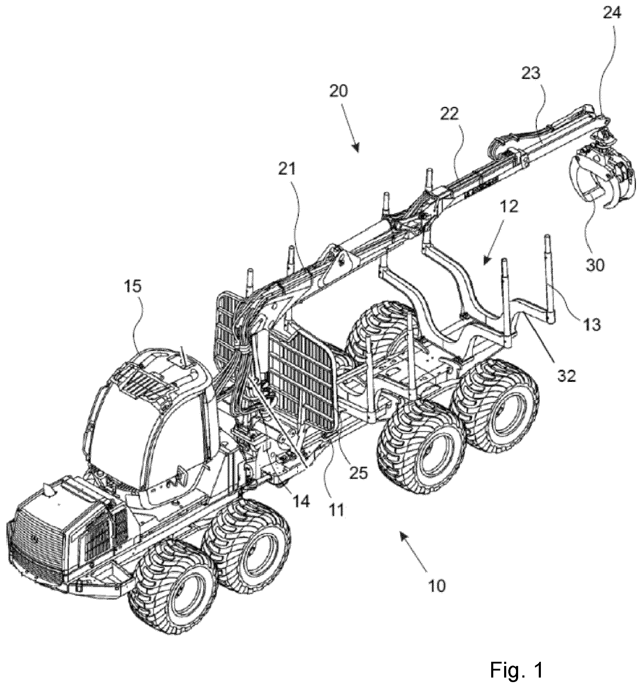

Figure 1 shows an example of a forwarder 10 in which the invention can be applied.

The forwarder 10 comprises an articulated frame 11 with a rear frame part and a front frame part, both supported on wheels. The front frame part supports an operator's cabin 15 and an engine compartment. The rear frame part includes a loading space 12 for logs and supports an articulated boom 20 having a log handling tool, e.g. a grapple 30, attached to its head 24. The boom 20 may be constituted by a knuckle boom crane. The boom 20 with the grapple 30 may be moved into a stowed position in which they are located in the loading space 12 that is open at the top. The rear frame part may further support a protective headboard 25 between the operator's cabin 15 and the loading space 20.

The loading space 12 may be surrounded by posts 13. The posts 13 may be supported by bunks 32 supported by and extending across the rear frame part. Each bunk 32 may include a pair of posts 13 on opposite sides of the rear frame part. The posts 13 are located on both sides of the rear frame part and on each side, the posts 13 are consecutive in the longitudinal direction of the forwarder 10 and the loading space 12. There may be at least two consecutive posts 13 on each side.

The loading space 12 is bordered by structures, for example by walls, the posts 13 and/or the headboard 25, that define, in a cross-section on an imaginary horizontal plane, the outside and the inside of the loading space 12. At the end of the loading space 12 and the rear frame part, logs may extend outside the loading space 12 and beyond the rearmost posts 13.

In the context of this description, the inside of the loading space 12 extends, in a vertical direction, to an imaginary horizontal plane defined by top ends of the bordering structures or the upper ends of the posts 13. Also, the space above this imaginary horizontal plane above the loading space 12 is considered as being outside the loading space 12.

During operation of the forwarder 10, an operator sitting in the operator's cabin 15 drives the forwarder 10 sufficiently close to a pile to be collected and may manually control the boom 20 and the grapple 30 to take up one or more logs at a time from the pile and to deposit them into the loading space 12. Under control of the operator, logs in several piles are collected and loaded into the loading space 12 to constitute a load. Once the loading space 12 is sufficiently filled, the forwarder 10 is driven for transporting the deposited logs to, for example, a forest depot, close to a logging road, where it deposits its load into one or more piles.

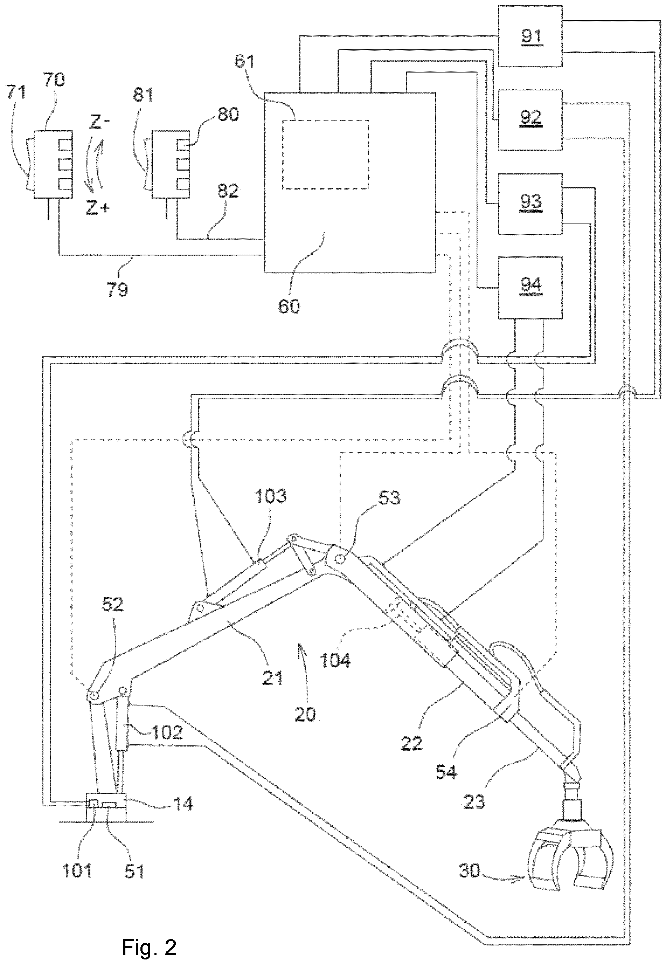

With reference to Figs. 1 and 2, the boom 20 is formed of a hoisting boom 21, a stick boom 22 and an extension boom 23. The boom 20 is mounted on the frame 11 with the help of a slewing device 14 placed, for example, between the operator's cabin 15 and the loading space 12 so that the boom 20 can be slewed by rotating it around a vertical rotation axis X_{c}, with respect to the frame 11 from one side of the loading space 12 to another. The hoisting boom 21 is mounted by a joint to the slewing device 14, the stick boom 22 is mounted by a joint to an end of the hoisting boom 21, and the extension boom 23 is fitted at an end of the stick boom 22, to be movable in its longitudinal direction so that it can move from the end of the stick boom 22 to the inside of the stick boom 22 and protrude from it.

Actuators 101, 102, 103, 104 functioning, for example, hydraulically, are provided for movements of the boom 20, for example between the hoisting boom 21 and the slewing device 14, between the hoisting boom 21 and the stick boom 22, and between the stick boom 22 and the extension boom 23, for turning the hoisting boom 21 with respect to the slewing device 14, for turning the stick boom 22 with respect to the hoisting boom 21, and for moving the extension boom 23 in and out of the stick boom 22. The actuators 101, 102, 103, 104 may be constituted by linear actuators, e.g. hydraulic cylinders.

With reference to Fig. 2, control of the forwarder 10 and the boom 20 is configured to be carried out from the operator's cabin 15 by the operator with the help of one or more manually operable control devices 70, 80. For this, the operator's cabin 15 may be equipped with one or more controllers in the form of a joystick constituted by, for example, a stick pivotable on a base. The controller may include one or more supplementary control elements 71, 81 such as, for example, rocker switches, rocker levers, switches, or pushbuttons. The controller, when pivotable, is configured to be turned forward, backward, to the left and to the right for controlling movements of the boom 20 or its head 24.

For actuating control functions, the operator may have a joystick for the left hand and another joystick for the right hand. The joystick may include a rocker switch provided therein for controlling, for example, the movement of the boom 20 as well as the closing and opening of the grapple 30.

During the actuation, control commands formed by the control functions actuated by the control devices 70, 80 are transmitted from these control devices 70, 80 along communication buses 79, 82 to a control unit 60 including a memory device 61. The control unit 60 applying software elements including algorithms actually takes care of controlling devices and actuators, for example the actuators 101, 102, 103, 104, setting off various functions of the boom 20 and the grapple 30, for example by controlling magnetic valves 91, 92, 93, 94 of the actuators 101, 102, 103, 104 in a way required by the control functions.

The control unit 60 including the memory device 61 is adapted to store one or more target positions Pt which are located in the space around, in the vicinity of, or within reach of the boom 20 and to which the boom 20 may transfer the grapple 30 or the head 24 automatically. The transfer may start from a start position represented by one of the target positions Pt, or from a random position, or from current position of the grapple 30 or the head 24. Alternatively, the transfer may start from a start position represented by one of the target positions Pt via which the grapple 30 or the head 24 has moved during a preceding automatic transfer.

The target position Pt may be defined with respect to the forwarder 10 or the boom 20. The one or more target positions Pt may include, on the one hand, one or more predetermined or fixed target positions Pt already stored in the control unit 60 and, on the other hand, temporary target positions Pt defined during operation of the forwarder 10 or the boom 20.

The control unit 60 determines a path 34 for the head 24 and/or the grapple 30 to one or more of the target positions Pt from the start position. The control unit 60 may take into account predetermined obstacles located within the reach of the boom 20 and preferably stored in the control unit 60.

According to an example, the automatic transfer of the head 24 or, more preferably, the grapple 30 to the target position Pt is actuated or set off by means of a predetermined motion or a predetermined sequence of motions of the above control device(s) 70, 80, the motion(s) being brought about manually by the operator.

According to an example, the control device(s) 70, 80 in which the motion(s) is/are applied is the controller in the form of the joystick.

According to an example, the predetermined motion or sequence of motions includes turning the controller, when pivotable, to forward, backward, to the left, and/or to the right as if controlling a movement of the boom 20, the head 24, or the grapple 30.

According to an example, the above turning motion is preferably the one setting off the above slewing motion of the boom 20 about the vertical rotation axis X_{c} actuated by means of the slewing device 14. According to an example, the turning motion includes turning the controller to the left or right with respect to the operator.

According to an example, the control unit 60 is adapted to set one or more of the target positions Pt that are stored to be active or inactive. The inactive target position Pt is not included in the above path 34 for the transfer. According to an example, when all the target positions Pt are inactive, the boom 20 will be moved merely according to the operator applying the control devices 70, 80.

According to an example, the operator is able to select one or more of the stored target positions Pt to be active or inactive. This may take place by means of an input/output device operably connected to the control unit 60. The input/output device may be, for example, a keyboard, a screen, and/or a touch-sensitive display unit.

The target position Pt may be located, in an imaginary horizontal plane, in or above the centre of the loading space 12. This target position Pt may be, in a vertical direction, below (i.e. inside the loading space 12) or above (i.e. outside the loading space 12) the above imaginary horizontal plane defined by the bordering structures of the loading space 12, e.g. the upper ends of the posts 13.

According to a first example related to, for example, loading logs with the forwarder 10, the transfer and the path 34 includes at least a first target position Pt that is inside the loading space 12 and a second target position Pt that is outside the loading space 12 (i.e. above or beside the loading space 12). Additionally, the transfer and the path 34 may include a third target position Pt that is preferably outside the loading space 12, at the current position of the head 24 or the grapple 30.

According to a preferred example, the third target position Pt and/or the above current position is a location above or on top of a pile of logs that is on the ground and from which logs are to be loaded into the loading space 12.

According to an example, the automatic transfer and the path 34 is configured to start at the third target position Pt or at the current position, and to proceed via the second target position Pt to the first target position Pt representing an end of the path 34 and a stop position where the transfer automatically stops.

According to a second example related to, for example, moving the grapple 30 from the loading space 12 in preparation for loading logs, the transfer and the path 34 includes at least a fourth target position Pt that is outside the loading space 12 (e.g. beside the loading space 12) and a fifth target position Pt that is also outside the loading space 12 (i.e. above or beside the loading space 12). Additionally, the transfer and the path 34 may include a sixth target position Pt that is, preferably inside the loading space 12, at the current position of the head 24 or the grapple 30.

According to a preferred example, the fourth target position Pt is a location above or on top of a pile of logs that is on the ground and from which logs are to be loaded into the loading space 12. The pile may be the same as in the first example. Alternatively, the fourth target position Pt is substituted by the third target position Pt when, for example, the pile is the same as in the first example.

According to an example, the automatic transfer and the path 34 is configured to start at the sixth target position Pt or at the current position, and to proceed via the fifth target position Pt to the fourth target position Pt representing an end of the path 34 or a stop position where the transfer automatically stops.

Additionally, the sixth target position Pt may be, according to an example, substituted by the first target position Pt and/or the fifth target position Pt may be substituted by the second target position Pₜ when, for example, representing the same location.

According to an example, the above automatic transfer to the target position Pt including the path 34, is configured to take place only when enabled by the operator. The automatic transfer along the path 34 is actuated or set off by means of the predetermined motion or sequence of motions that is carried out after the enabling.

Additionally, the automatic transfer and the path 34 may be disabled by the operator, or the automatic transfer and the path 34 are automatically disabled by the control unit 60 after the head 24 or the grapple 30 has reached the target position Pt representing the stop position at which the transfer automatically stops. After the disabling, the operator needs to enable the automatic transfer along the path 34 when such a transfer is necessary.

The enabling may be carried out by applying the manually operable control device 70, 80, for example the controller, the supplementary control element of the controller, or the input/output device.

According to an example, the enabling is carried out by applying the supplementary control element 71, 81 in the controller constituted by the joystick. According to an example, the supplementary control element 71, 81 is a pushbutton.

According to an example, the enabling has the effect that the current position of the head 24 or the grapple 30, at the moment of the enabling, is the above start position from which the transfer and the path 34 starts. The start position may be stored as one of the target positions Pt in the control unit 60 and, for example, as the third or sixth target position Pt in the above first or second examples.

Thanks to the automatic transfer, the operator does not need to worry about stopping manual operations at the right moment in order to stop the motion of the boom 20 reliably at the right moment, but the control unit 60 may stop the motion in such a way that the head 24 and/or the grapple 30 stop at the target position Pt softly and preferably without swaying.

With reference to Fig. 2, measuring elements 51, 52, 53, 54 may be installed in the slewing device 14, in the joint between the slewing device 14 and the hoisting boom 21, in the joint between the hoisting boom 21 and the stick boom 22, and between the stick boom 22 and the extension boom 23. The measuring elements 51, 52, 53 may measure the position of the slewing device 14, for example its angle of rotation with respect to a given reference position, the angle of the hoisting boom 21 and the angle of the stick boom 22 with respect to each other and the slewing device 14. The measuring element 54 may measure the movement of the extension boom 23. The measuring elements 51, 52, 53, 54 may be constituted by angle sensors and/or linear sensors.

The measuring elements 51, 52, 53, 54 are operably connected to the control unit 60 that receives measurement data generated by the measuring elements 51, 52, 53, 54 and indicative of the measured quantity. By means of the measurement data, the control unit 60 is able to determine the position of the slewing device 14, the hoisting boom 21, the stick boom 22, and the extension boom 23. On the basis of the measurement data and/or the above positions, the control unit 60 is able to determine the position of the boom 20, the head 24, and/or the grapple 30 with respect to a predetermined reference point. Additionally, the control unit 60 is able to define and correct the path 34.

The path 34 of the head 24 and/or the grapple 30 may include one of more of the target positions Pt, arranged consecutively. The path 34 proceeds according to a predetermined sequence of the target positions Pt. These target positions Pt of the path 34 may be selected in advance and the control unit 60 may store one or more of these predetermined paths 34. Additionally, the predetermined path 34 may include the start position as represented by one of the target positions Pt. Alternatively, the predetermined path 34 may be complemented by the start position as represented by the current position of the head 24 or the grapple 30.

According to an example, the operator is able to select one or more of the stored predetermined paths 34 to be active or inactive. This may take place by means of the input/output device. Preferably, only one of the predetermined paths 34 is active at a time.

According to an example, upon the enabling carried out by the operator, the control unit 60 is able to automatically select one of the stored predetermined paths 34 both to be active and for the automatic transfer. This predetermined path 34 constitutes a default. According to an example, the above first and second target positions Pt define the default, together with the start position, the current position, or the third target position Pt. Alternatively, the above fourth and fifth target positions Pt define the default, together with the start position, the current position, or the sixth target position Pt. According to an example, the predetermined path 34 constituting the default may be followed by a secondary default constituted by another one of the predetermined paths 34 and to be selected automatically after completing the default and upon the enabling that follows. According to an example, the secondary default may be set active or inactive by the operator.

With the measuring elements 51, 52, 53, 54, the position, speed and/or acceleration of a point in the forwarder 10, the boom 20, the head 24, and/or the grapple 30 can be determined with respect to a given reference point. The control unit 60 may continuously control the movements of the actuators and devices, for example the actuators 101, 102, 103, 104, in such a way that the head 24 and/or the grapple 30 travels along one of the predetermined paths 34 as closely as possible. The control unit 60 may know the position of predetermined obstacles in the vicinity of the loading space 12 and is thus capable of generating the path 34 in such a way that collisions are avoided, for example the grapple 30 colliding with the post 13 or the headboard 25.

The target position Pt may be defined, for example, by manually entering in the control unit 60 coordinates of the target position Pt with respect to a given reference point that may be located in the forwarder 10 or the boom 20, and/or with the help of calculations taking into account the measurement data related to the position of the boom 20, the head 24, and/or the grapple 30, and/or with the help of the measurement data generated by the measuring elements 51, 52, 53, 54. Additionally, the control unit 60 may include one or more location determining devices adapted to define the location of an element of the forwarder 10, e.g. the head 24 or the grapple 30, with respect to the forwarder 10 and/or to receive navigation signals from a global positioning system like GPS.

A random location may be defined to be one of the target positions Pt by stopping the head 24 or the grapple 30 at the random location and determining the position of the boom 20, the head 24 and/or the grapple 30 in the way as explained above. The position may be stored in the control unit 60 as the target position Pt.

According to an example, the position of the boom 20, the head 24, and/or the grapple 30 defined at the moment of the above enabling constitutes one of the target positions Pt and may be stored in the control unit 60.

The automatic transfer explained above may be applied, for example, when the forwarder 10 has been driven next to a pile of logs and the logs are to be loaded from the pile into the loading space 12 of the forwarder 10. The grapple 30 is thus moved to a location above the pile by moving the boom 20, after which the grapple 30 is employed to grip logs in the pile for transferring them into the loading space 12. After that, the grapple 30 being, preferably, in a location above the pile or in another location, to be representing the current position and constituting a start position, the operator first enables and then sets off the automatic transfer as explained above and the grapple 30 is transferred to the next target location Pt defined by the path 34, for example the second target position Pt. The start position may be stored and represent the third target position Pt of the above first example.

When entering the loading space 12, the grapple 30 and the logs therein are preferably lifted higher than the imaginary horizontal plane defined by the bordering structures of the loading space 12. The location of the target position Pt outside the loading space 12 and in use for the automatic transfer, for example the second target position Pt, is selected accordingly.

Then, from this target position Pt, the grapple 30 and the logs therein are lowered to the target position Pt inside the loading space 12, possibly representing the stop position and the first target position Pt of the above first example, to a suitable height inside the loading space 12 below the imaginary horizontal plane. At this target position Pt, the automatic transfer stops and any automatic transfer is automatically disabled. When necessary, the grapple 30 may be additionally transferred manually by the operator to a location that is suitable for dropping or depositing the logs on the bottom of the loading space 12 or onto logs already placed therein, by opening gripping jaws provided in the grapple 30.

When exiting the loading space 12, the grapple 30 that is empty may be lifted higher than the imaginary horizontal plane, to above or beside the loading space 12 (i.e. outside the loading space 12). The location of the target position Pt outside the loading space 12 and in use for the automatic transfer, for example the fifth target position Pt, is selected accordingly.

Then, from this target position Pt, the grapple 30 is lowered to the target position Pt above the pile of logs, possibly representing the stop position and/or, for example, the fourth target position Pt, to a suitable height. When necessary, the grapple 30 may be additionally transferred manually by the operator to a location that is suitable for gripping logs in the pile, by opening the gripping jaws of the grapple 30. Thereafter, loading of the logs continues.

The invention is not limited to the examples presented above, but it may be implemented in a variety of ways within the scope of the appended claims.

## Claims

1. A method for controlling a forwarder (10) including
- an articulated boom (20) including a head (24) of the boom, wherein the boom (20) is movable in vertical and horizontal directions and slewable around a vertical rotation axis (X_{c}),
- a loading space (12) that is open at the top,
- a grapple (30) for handling logs and suspended from the head (24),
- a control unit (60) including a memory device for controlling movements of the boom (20), and
- at least one control device (70, 80) operatively connected to the control unit (60) and adapted to be manually operable by an operator for setting off operations;
the method comprising:
- storing in the control unit (60) one or more predetermined paths (34) of the head (24) or the grapple (30);
- enabling an automatic transfer of the head (24) or the grapple (30) along one of the paths (34), wherein the enabling is carried out manually by the operator with the help of the control device;
- setting off the automatic transfer with the help of a predetermined motion or sequence of motions carried out manually by the operator with the help of the control device;
- automatically transferring the head (24) or the grapple (30) under control of the control unit (60), from a current position of the head (24) or the grapple (30) representing a starting position of the path (34), along the path, and to an end of the path representing a stopping position of the path;
- stopping the head (24) or the grapple (30) at the end of the path (34); and
- automatically disabling the automatic transfer of the head (24) or the grapple (30) under control of the control unit (60) after reaching the stopping position.

2. The method according to claim 1, wherein each path (34) is constituted by two or more predetermined target positions Pt for the head (24) or the grapple (30), wherein the target positions Pt are located in the space around, in the vicinity of, or within reach of the boom (20), the head (24), or the grapple (30), and wherein the path (34) is represented by the target positions Pt in a predetermined sequence.

3. The method according to claim 1 or 2, wherein the path (34) is adapted for loading logs from a pile on the ground into the loading space (12).

4. The method according to claim 1 or 2, wherein the path (34) is adapted for unloading logs from the loading space (12) to a pile on the ground.

5. The method according to any one of claims 1 to 4, wherein the control device (70, 80) is a controller in the form of a joystick, wherein the controller is pivotable and adapted to be turned forward, backward, to the left, and/or to the right for controlling movements of the boom (20), the head (24), and/or the grapple (30), the method further comprising:
- carrying out the predetermined motion or sequence of motions by means of the controller.

6. The method according to claim 5, wherein the controller includes a supplementary control element (71, 81), the method further comprising:
- carrying out the enabling by means of the supplementary control element.

7. The method according to any one of claims 1 to 6, wherein one of the paths (34) constitutes a default path to be selected automatically when the operator enables the automatic transfer.

8. The method according to any one of claims 1 to 7, wherein the method further comprises:
- automatically storing the current position of the head (24) or the grapple (30) under control of the control unit (60) as the starting position of the path (34).

9. The method according to claim 8, wherein the method further comprises:
- automatically storing the starting position of the path (34) as constituting the stopping position of another one of the paths (34); and
- enabling by the operator an automatic transfer of the head (24) or the grapple (30) along the other path.

10. The method according to claim 9, wherein the other path constitutes a default path to be selected automatically when the operator enables the automatic transfer and after reaching the stopping position.

11. The method according to any one of claims 1 to 10, the method further comprising:
- manually moving the head (24) or the grapple (30) by the operator to a location on or above a pile of logs on the ground after gripping logs from the pile with the help of the grapple (30), wherein the location constitutes the starting position for the path (34).

12. The method according to claims 2 and 11, wherein the path (34) includes one of the target positions Pt outside the loading space (12) and one of the target positions Pt inside the loading space (12) and constituting the stop position of the path (34).

13. The method according to any one of claims 1 to 12, the method further comprising:
- manually moving the head (24) or the grapple (30) by the operator to a location inside the loading space (12) after depositing logs into the loading space (12) from the grapple (30), wherein the location constitutes a starting position for another one of the paths (34).

14. The method according to claims 2, 11 and 13, wherein the other path includes one of the target positions Pt outside the loading space (12) and one of the target positions Pt constituting both the starting position of the path (34) and a stop position of the other path.

15. A forwarder (10) comprising
- an articulated boom (20) including a head (24) of the boom, wherein the boom (20) is movable in vertical and horizontal directions and slewable around a vertical rotation axis (X_{c}),
- a loading space (12) that is open at the top,
- a control unit (60) including a memory device for controlling movements of the boom (20), and
- at least one control device (70, 80) operatively connected to the control unit (60) and adapted to be manually operable by an operator for setting off operations, wherein the head (24) is adapted to have, for handling logs, a grapple (30) suspended from it, and wherein the control unit (60) is adapted to automatically, under control of the operator, to carry out the method according to any one of claims 1 to 14.
